Europäisches Patentamt

European Patent Office

Office européen des brevets

(19)

(11) Veröffentlichungsnummer : **0 158 742**
**B1**

(12)

# EUROPÄISCHE PATENTSCHRIFT

(45) Veröffentlichungstag der Patentschrift :
09.09.87

(21) Anmeldenummer : 84116318.1

(22) Anmeldetag : 27.12.84

(51) Int. Cl.⁴ : **B 66 C 13/12, H 02 G 11/04**

(54) **Kabelwagen.**

(30) Priorität : 16.03.84 DE 3409628

(43) Veröffentlichungstag der Anmeldung :
23.10.85 Patentblatt 85/43

(45) Bekanntmachung des Hinweises auf die Patenterteilung : 09.09.87 Patentblatt 87/37

(84) Benannte Vertragsstaaten :
AT FR GB IT SE

(56) Entgegenhaltungen :
DE-A- 2 048 779
DE-A- 2 262 191
DE-A- 2 641 459
DE-B- 1 245 247
DE-B- 1 290 390
FR-A- 2 227 213
US-A- 2 332 112
US-A- 3 143 367

(73) Patentinhaber : MANNESMANN Aktiengesellschaft
Mannesmannufer 2
D-4000 Düsseldorf 1 (DE)

(72) Erfinder : Bruckereck, Ulrich, Ing. grad.
Beethovenstrasse 12
D-5860 Iserlohn (DE)
Erfinder : Gabriel, Klaus-D., Dipl. -Ing.
Harkortstrasse 16
D-5802 Wetter (DE)

## Beschreibung

Die Erfindung betrifft einen Kabelwagen mit einem mit Rollen in einer Schiene geführten Grundkörper, an dem die Kabel über eine sie umfassende, als schließbare Schlaufe ausgebildete Aufhängung befestigt sind.

Beim Kabelwagen nach der DE-OS 20 48 779 hat die Schlaufe eine Zahnrastung für eine Haltelasche, mit der ein Rundkabel an einem Halter befestigt ist. Für jede Kabeldicke ist eine besondere Halterung erforderlich. Auch muß die Haltelasche mit ihrer Verzahnung stabil sein und verlangt damit einen großen Materialeinsatz. Die Halterung eignet sich nicht für Flachkabel, die bekanntlich nur waagerecht angeordnet werden können. Ein waagerecht liegendes Kabel würde die Haltelasche mit ihrer Zahnrastung so verformen, daß sich die Halterung löst.

Bei einem Kabelwagen nach der DE-PS 22 62 191 dient als Kabelaufhängung ein durch den Grundkörper geführter, an nach unten gerichteten Enden mit Gewinden versehener Rundstab, an dem eine Kabeltragfläche mittels Muttern befestigt wird. Diese bewährte Kabelaufhängung ist für schwere Aufhängungen zu empfehlen, zumal mehrere Kabelbündel untereinander aufhängbar sind. Für leichtere Ausführungen ist dieser Aufwand jedoch unvertretbar groß.

Aufgabe der Erfindung ist es daher, eine einfache, preiswerte, schnell montierbare Aufhängung für Kabel an einem Kabelwagen zu schaffen. Diese Aufgabe wird dadurch gelöst, daß die Schlaufe mit zwei Schlitzen in ihren Seitenarmen zur Aufnahme eines die Kabel vollständig umschlingenden Klemmbandes versehen ist. Die Schlaufe trägt die Kabel, und das durch ihre Schlitze geführte Klemmband sichert die Kabel innerhalb der Schlaufe gegen Verrutschen. So ist mit einfachsten Mitteln eine preiswerte, montagefreudige Aufhängung für Kabel geschaffen.

In weiterer Ausgestaltung der Erfindung kann die Schlaufe im Bereich unter den Kabeln für eine sich quer zur Fahrtrichtung des Kabelwagens erstreckende, im Querschnitt nach oben gewölbte Kabeltragfläche haben, unter der eine Durchstecköse für das Klemmband vorhanden sein kann und an deren Enden die Schlitze für des Klemmband beginnen und bis über die Kabel reichen können, so daß die Sicherung der Kabel in der Schlaufe mit geringem Aufwand gewährleistet ist.

Das Klemmband ist vorzugsweise ein mit feinen Querrippen versehener, durch eine Durchsteck-Klemmöse führbarer, die Kabel umschlingender Zugstreifen und ebenso wie die Schlaufe aus Kunststoff hergestellt, wobei Klemmband und Schlaufe auch aus einem Stück bestehen können.

Die Schlaufe ist in weiterer Ausgestaltung der Erfindung an ihren Enden über eine Querverbindung am Grundkörper des Kabelwagens befestigt, wobei die Querverbindung als Stift und dazu passende Hülse an den Enden der mit Anschlagschultern versehenen Schlaufe ausgebildet sein kann. Sie kann auch ein Hülsenniet oder eine Schraube sein.

Mehrere Ausführungsbeispiele der Erfindung sind in der Zeichnung dargestellt und im folgenden erläutert. Es zeigen :

Figur 1  einen Querschnitt durch eine Schiene mit einem darin angeordneten Kabelwagen,

Figur 2  die Seitenansicht von Fig. 1,

Figur 3  Detail III aus Fig. 1 in größerem Maßstab,

Figur 4  die Schlaufe aus Fig. 1 in Abwicklung,

Figur 5  einen Längsschnitt durch eine Schlaufe gemäß V-V in Fig. 4.

In einer Schiene 2 ist ein Kabelwagen mit Rollen 3 verfahrbar, dessen Grundkörper 4 eine Querbohrung 4a für die als Kunststoffschnappverbindung mit einem Stift 5a für eine Hülse 5b ausgebildeten Enden 6a einer Schlaufe 6 hat wobei Stift 5a und Hülse 5b durch einfaches Zusammendrücken unlösbar miteinander verbunden werden. Die Enden 6a haben Anschlagschultern 6b, mit denen ein Durchrutschen der Schlaufe 6 durch die Querbohrung 4a verhindert wird.

Die Schlaufe 6 weist eine Kabeltragfläche 8 auf, auf der die zu stützenden Kabel 1 aufliegen, deren Stützfläche, in Kabelrichtung gesehen, mit den Enden nach unten gebogen ist und unter der eine Durchstecköse 9 für ein Klemmband 10 vorhanden ist. Dieses Klemmband 10 liegt im Bereich seitwärts neben den Kabeln 1 in Schlitzen 7 der Schlaufe 6 und ist durch eine Durchsteck-Klemmöse 12 geführt und festgezogen, wobei Querrippen 11 des Klemmbandes 10 das Zurückziehen des Klemmbandes wegen eines Vorsprunges 13 in der Durchsteck-Klemmöse 12 verhindern.

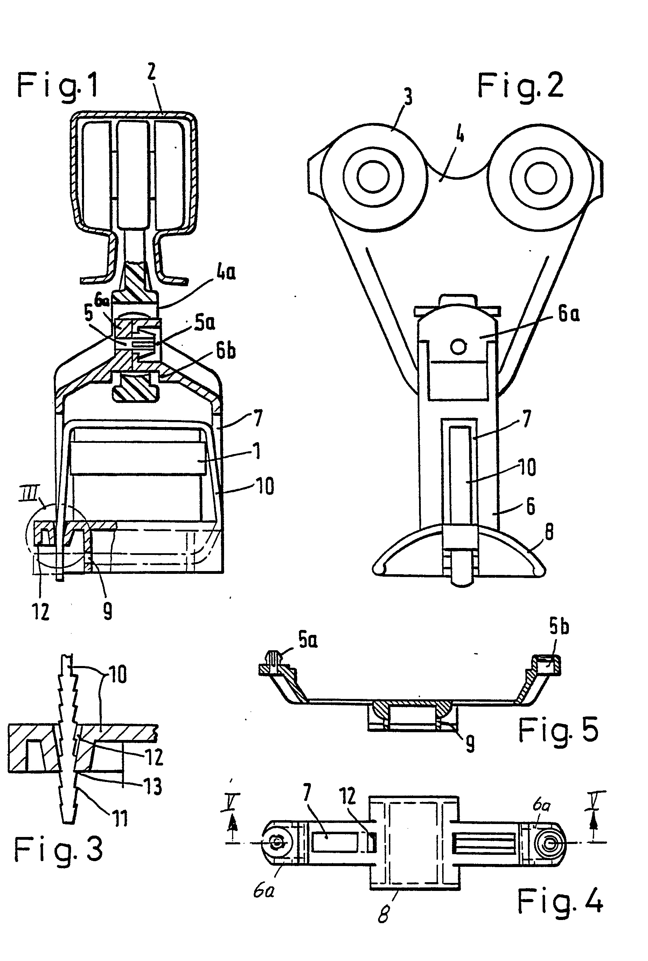

Beim gezeichneten Ausführungsbeispiel nach Fig. 1 ist das Klemmband 10 ein Teil der Schlaufe 6. Bei einem anderen, durch strichpunktierte Linien in Fig. 1 angedeuteten Ausführungsbeispiel ist ein separates Klemmband durch die Durchstecksösen 9 geführt ; Fig. 3 trifft für beide Ausführungsbeispiele zu.

## Patentansprüche

1. Kabelwagen mit einem mit Rollen (3) in einer Schiene (2) geführten Grundkörper (4), an dem die Kabel (1) über eine sie umfassende, als schließbare Schlaufe ausgebildete Aufhängung befestigt sind, dadurch gekennzeichnet, daß die Schlaufe (6) mit zwei Schlitzen (7) in ihren Seitenarmen für die Aufnahme eines die Kabel vollständig umschlingenden Klemmbandes (10) versehen ist.

2. Kabelwagen nach Anspruch 1, dadurch gekennzeichnet, daß die Schlaufe (6) im Bereich unter den Kabeln (1) für diese eine sich quer zur Fahrtrichtung des Kabelwagens erstreckende, im Querschnitt nach oben gewölbte Kabeltragfläche hat.

3. Kabelwagen nach Anspruch 2, dadurch gekennzeichnet, daß die Schlaufe (6) unter der Kabeltragfläche (8) eine Durchstecköse (9) für das mit einem Fuß mit Durchsteck-Klemmöse (12) versehene Klemmband (10) hat.

4. Kabelwagen nach den Ansprüchen 1 und 3, dadurch gekennzeichnet, daß die Schlitze (7) der Schlaufe (6) von den Enden der Kabeltragfläche (8) bis über die Kabel (1) reichen.

5. Kabelwagen nach Anspruch 1, dadurch gekennzeichnet, daß das Klemmband (10) ein mit feinen Querrippen (11) versehener, durch eine Durchsteck-Klemmöse (12) führbarer, die Kabel (1) umschlingender Zugstreifen ist.

6. Kabelwagen nach einem oder mehreren der vorgenannten Ansprüche, dadurch gekennzeichnet, daß Klemmband (10) und Schlaufe (6) einstückig aus einem Kunststoff hergestellt sind.

7. Kabelwagen nach Anspruch 1, dadurch gekennzeichnet, daß die Schlaufe (6) an ihren Enden (6a) über eine Querverbindung (5) am Grundkörper (4) des Kabelwagens befestigt ist.

8. Kabelwagen nach Anspruch 7, dadurch gekennzeichnet, daß die Schlaufenenden (6a) mit einem Stift (5a) und einer dazu passenden Hülse (5b) zum Bilden der Querverbindung (5) versehen sind.

9. Kabelwagen nach Anspruch 7, dadurch gekennzeichnet, daß die Querverbindung (5) ein Hülsenniet ist.

10. Kabelwagen nach Anspruch 7, dadurch gekennzeichnet, daß unter den Schlaufenenden (6a) Anschlagschultern (6b) vorhanden sind.

## Claims

1. Cable trolley equipped with a base body (4) which is guided by means of rollers (3) in a rail (2) and to which the cables (1) are fixed by means of a suspension device in the form of a closable loop which encircles the cables, characterized by the fact that the loop (6) has in its side arms two slots (7) used for accommodating a clamping strip (10) which fully encircles the cables.

2. Cable trolley in accordance with claim 1, characterized by the fact that the loop (6) is equipped for the cables with a cable supporting surface which is arranged under the cables and which extends in a direction transverse to the travelling direction of the cable trolley and whose cross-section is upwardly convex.

3. Cable trolley in accordance with claim 2, characterized by the fact that the loop (6) is equipped with an eye (9) which is arranged under the cable supporting surface and which is used for the clamping strip (10) which has a plug-through clamping eye (12) with a foot.

4. Cable trolley in accordance with claims 1 and 3, characterized by the fact that the slots (7) of the loop (6) extend from the ends of the cable supporting surface (8) over the cables (1).

5. Cable trolley in accordance with claim 1, characterized by the fact that the clamping strip (10) is a pull strip which is fitted with fine transverse fins (11) and can be passed through a clamping eye (12) and encircles the cables.

6. Cable trolley in accordance with one or several of the above claims, characterized by the fact that the clamping strip (10) and the loop (6) are made of one single piece of plastic material.

7. Cable trolley in accordance with claim 1, characterized by the fact that the ends (6a) of the loop (6) are fixed to the base body (4) of the cable trolley by means of a transverse connection (5).

8. Cable trolley in accordance with claim 7, characterized by the fact that the loop ends (6a) are fitted with a pin (5a) and a sleeve (5b) suitable for the pin in order to form the transverse connection (5).

9. Cable trolley in accordance with claim 7, characterized by the fact that the transverse connection (5) is a sleeve-type rivet.

10. Cable car in accordance with claim 7, characterized by the fact that there are stop shoulders (6b) under the loop ends (6a).

## Revendications

1. Chariot à câble avec un corps principal (4) guidé dans un rail (2) par des galets (3), sur lequel les câbles (1) sont fixés par un accrochage sous forme de crochet verrouillable qui les entoure, caractérisé en ce que le crochet à câble (6) possède deux fentes (7) dans ses bras latéraux, pour recevoir un collier de serrage (10) entourant complètement les câbles.

2. Chariot à câble selon la revendication 1, caractérisé en ce que le crochet (6) possède dans la zone située sous les câbles (1), et pour ceux-ci, une surface d'appui des câbles s'étendant transversalement par rapport au sens de déplacement du chariot a câble, dont la section est bombée vers le haut.

3. Chariot à câble selon la revendication 2, caractérisé en ce que le crochet (6) possède un œillet d'accrochage (9) situé au-dessous de la surface d'appui du câble (8), pour le collier de serrage (10) avec un fût possédant un œillet de serrage (12).

4. Chariot à câble selon les revendications 1 et 3, caractérisé en ce que la fente (7) du crochet à câble (6) s'étend depuis les extrémités de la surface d'appui de câble (8), jusqu'au-dessus du câble (1).

5. Chariot à câble selon la revendication 1, caractérisé en ce que le collier de serrage (10) se présente sous la forme d'une bande de traction ayant de fines nervures transversales (11), devant passer au travers d'un oeillet de serrage (12), entourant complètement le câble (1).

6. Chariot à câble selon une ou plusieurs des revendications précédentes, caractérisé en ce que le collier de serrage (10) et le crochet (6) forment une seule pièce, fabriquée en une matière plastique.

7. Chariot à câble selon la revendication 1, caractérisé en ce que le crochet (6) est fixé à ses extrémités (6a) au moyen d'une liaison transversale (5) sur le corps principal (4) du chariot à câble.

8. Chariot à câble selon la revendication 7, caractérisé en ce que les extrémités de crochet (6a) possèdent une goupille (5a) et une douille (5b) qui lui est adaptée, afin de former la liaison transversale (5).

9. Chariot à câble selon la revendication 7, caractérisé en ce que la liaison transversale (5) est un rivet à douille.

10. Chariot à câble selon la revendication 7, caractérisé en ce que des épaulements de butée (6b) se trouvent au-dessous des extrémités de crochet (6a).

Fig.1

Fig.2

Fig.3

Fig.5

Fig.4